# EUROPEAN PATENT APPLICATION

(11) **EP 4 760 891 A1**
(43) Date of publication of application: **17.06.2026**
(21) Application number: 24886252.6
(22) Date of filing: 30.10.2024
(51) Int. Cl.: H01M 50/102, H01M 50/105, H01M 10/04, H01M 50/184

(54) **SECONDARY BATTERY AND METHOD FOR MANUFACTURING SECONDARY BATTERY**

(30) Priority: 30.10.2023 KR 20230147134; 29.10.2024 KR 20240149725
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); YU, Hyung Kyun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/016814
(87) International publication number: WO 2025/095580

(57) **Abstract**

The present disclosure relates to a secondary battery that can be charged and discharged and a method for manufacturing such a secondary battery. A secondary battery according to the present disclosure may include an electrode assembly; a pouch-type exterior material having an internal space that accommodates the electrode assembly and an exterior material opening that allows the internal space to communicate with the outside; and a cover member inserted into the exterior material opening, wherein the exterior material may include a plurality of wing portions folded to meet an outer surface facing the outside among surfaces of the cover member, and the plurality of wing portions may be coupled to the outer surface of the cover member to seal the internal space. A method for manufacturing a secondary battery according to the present disclosure may include a preparation step of preparing an electrode assembly and an exterior material sheet where a plurality of wing portions are formed; a packaging step of wrapping the electrode assembly with the exterior material sheet so that an internal space accommodating the electrode assembly and an exterior material opening allowing the internal space to communicate with the outside are formed; a cover member insertion step of inserting a cover member into the exterior material opening; a folding step of folding the plurality of wing portions so that the plurality of wing portions meet an outer surface facing the outside among surfaces of the cover member; and a sealing step of sealing the internal space by coupling the plurality of wing portions and the outer surface of the cover member.

## Description

### TECHNICAL FIELD

### CROSS-REFERENCE TO RELATED APPLICATIONS

The present application claims priority to Korean Patent Application No. 10-2023-0147134 filed on October 30, 2023 and Korean Patent Application No. 10-2024-0149725 filed on October 29, 2024 in the Republic of Korea, the disclosures of which are incorporated herein by reference.

### TECHNICAL FIELD

The present disclosure relates to a secondary battery that can be charged and discharged and a method for manufacturing such a secondary battery.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

Such a secondary battery may be classified in various ways depending on the type of exterior material that accommodates an electrode assembly. For example, the secondary battery may be classified into a prismatic secondary battery in which an electrode assembly is accommodated inside a prismatic metal can, a cylindrical secondary battery in which an electrode assembly is accommodated inside a cylindrical metal can, and a pouch-type secondary battery in which an electrode assembly is accommodated inside a pouch composed of a laminate sheet.

Meanwhile, a pouch-type secondary battery may be manufactured by means of accommodating an electrode assembly in a cup portion within a pouch and then sealing the pouch, and the molding depth of such a cup portion was limited due to the material properties of the pouch, so that there was a problem of being unable to mold the cup portion deep enough to increase the capacity of the secondary battery.

To solve this problem, a pouch-type secondary battery was conventionally manufactured by seating the electrode assembly in a pouch-type exterior material, folding or rolling the exterior material to form an internal space for accommodating the electrode assembly, inserting a cover member into an open area communicating with the internal space, and then sealing the exterior material and the cover member.

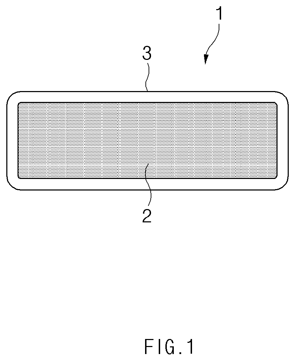

FIG. 1 is a view showing an example of such a conventional pouch-type secondary battery, and FIG. 1 is a view schematically showing a conventional pouch-type secondary battery as viewed from the front. The pouch-type secondary battery 1 includes a pouch-type exterior material 3 that accommodates an electrode assembly therein, and a cover member 2 that is inserted into an open area of the exterior material 3 and is coupled to an inner surface of the exterior material 3 to seal the internal space of the exterior material 3. The exterior material 3 is composed of a metal substrate layer and a resin layer formed on both surfaces of the metal substrate layer, and the cover member 2 may be thermally fused to an inner resin layer formed on the inner surface of the exterior material 3 to seal the internal space of the exterior material 3.

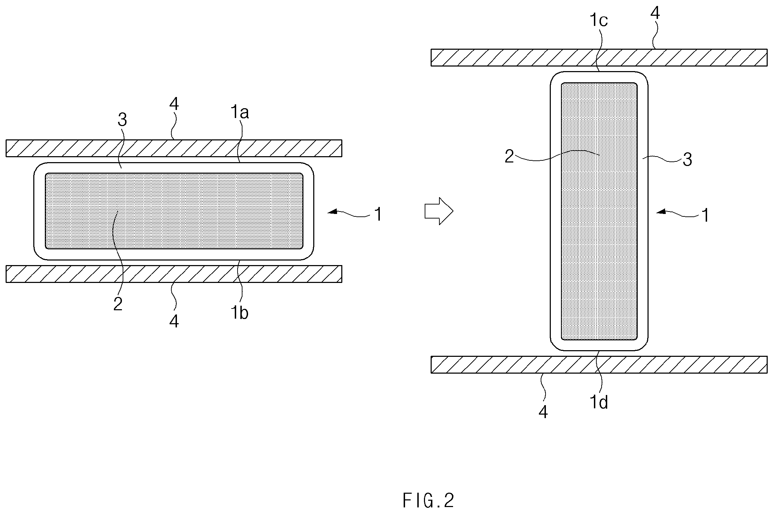

Meanwhile, FIG. 2 is a view showing an example of a sealing system that seals the pouch-type secondary battery of FIG. 1. To thermally fuse the exterior material 3 and the cover member 2, a process of pressing the cover member 2 and the exterior material 3 with a high-temperature sealing block 4 should be performed. Specifically, when the high-temperature sealing block 4 presses the upper surface 1a and the lower surface 1b of the secondary battery 1, the exterior material 3 may be thermally fused to the upper surface and the lower surface of the cover member 2, respectively. Additionally, when the high-temperature sealing block 4 presses the left and right side surfaces 1c, 1d of the secondary battery 1, the exterior material 3 may be thermally fused to the left and right side surfaces of the cover member 2, respectively.

However, when the cover member 2 and the exterior material 3 are thermally fused in this manner, the process of pressing the cover member 2 and the exterior material 3 with the sealing block 4 is performed in two separate steps, and thus there is a problem of reducing the sealing efficiency of the cover member 2 and the exterior material 3. Additionally, the pressing force by the sealing member is not effectively transmitted to the corner portion of the cover member 2, and thus the coupling performance of the cover member 2 and the exterior material 3 is degraded, which causes is a problem that the internal space of the exterior material 3 is not sealed.

### SUMMARY

### TECHNICAL PROBLEM

The present disclosure is designed to solve the problems of the related art, and therefore the present disclosure is directed to providing a secondary battery capable of rapidly sealing a cover member and an exterior material and improving the coupling performance of the cover member and the exterior material, and a method for manufacturing such a secondary battery.

### TECHNICAL SOLUTION

A secondary battery according to the present disclosure may include an electrode assembly; a pouch-type exterior material having an internal space that accommodates the electrode assembly and an exterior material opening that allows the internal space to communicate with the outside; and a cover member inserted into the exterior material opening, wherein the exterior material may include a plurality of wing portions folded to meet an outer surface facing the outside among surfaces of the cover member, and the plurality of wing portions may be coupled to the outer surface of the cover member to seal the internal space.

The exterior material may be formed by rolling or folding an exterior material sheet so that one end and the other end of the exterior material sheet including a metal layer and a resin layer formed on both surfaces of the metal layer meet each other.

One end and the other end of the exterior material sheet may be bonded or fused to each other.

Each of the plurality of wing portions may have a trapezoidal or rectangular shape.

The plurality of wing portions may be coupled to the outer surface of the cover member in a state of overlapping each other.

Portions where the plurality of wing portions overlap may be bonded or fused to each other.

The plurality of wing portions may be coupled to the outer surface of the cover member by adhesion or fusion.

Guide lines that guide folding of the wing portions may be formed on an inner surface of the exterior material.

The guide line may be a groove portion formed on the inner surface of the exterior material.

A through hole into which an electrode lead is inserted may be formed in the cover member, and the plurality of wing portions may not overlap the through hole.

A method for manufacturing a secondary battery according to the present disclosure may include a preparation step of preparing an electrode assembly and an exterior material sheet where a plurality of wing portions are formed; a packaging step of wrapping the electrode assembly with the exterior material sheet so that an internal space accommodating the electrode assembly and an exterior material opening allowing the internal space to communicate with the outside are formed; a cover member insertion step of inserting a cover member into the exterior material opening; a folding step of folding the plurality of wing portions so that the plurality of wing portions meet an outer surface facing the outside among surfaces of the cover member; and a sealing step of sealing the internal space by coupling the plurality of wing portions and the outer surface of the cover member.

The preparation step may include a wing portion forming step of forming a plurality of wing portions on the exterior material sheet by cutting the exterior material sheet.

The wing portion forming step may include a step of forming a plurality of trapezoidal wing portions by forming triangular or trapezoidal notched portions on the exterior material sheet.

The packaging step may include a seating step of placing the electrode assembly on an upper surface of the exterior material sheet; a winding step of wrapping the electrode assembly by rolling or folding the exterior material sheet so that one end and the other end of the exterior material sheet meet each other; and a coupling step of bonding or fusing the one end and the other end of the exterior material sheet.

The folding step may include a step of sequentially folding the plurality of wing portions so that the plurality of wing portions are folded in a state of overlapping each other.

The sealing step may include a step of applying heat and pressure to the cover member and the plurality of wing portions so that the plurality of wing portions are fused to the outer surface of the cover member in a state of overlapping each other.

The method for manufacturing a secondary battery according to the present disclosure may further include a guide line forming step performed between the preparation step and the packaging step and forming guide lines that guide folding of the wing portions by digging a groove in the inner surface of the exterior material sheet.

### ADVANTAGEOUS EFFECTS

In a secondary battery according to the present disclosure, the pouch-type exterior material includes a plurality of wing portions that are coupled to the outer surface of the cover member to seal the internal space of the cover member, so that the exterior material and the cover member may be rapidly sealed, and the coupling performance of the exterior material and the cover member may be improved to effectively seal the internal space of the exterior material.

In a method for manufacturing a secondary battery according to the present disclosure, the plurality of wing portions included in the pouch-type exterior material may be coupled to the outer surface of the cover member to seal the internal space of the cover member, so that the exterior material and the cover member may be rapidly sealed, and the coupling performance of the exterior material and the cover member may be improved to effectively seal the internal space of the exterior material.

### BRIEF DESCRIPTION OF THE DRAWINGS

FIG. 1 is a view showing an example of a pouch-type secondary battery.
FIG. 2 is a view showing an example of a sealing system that seals the pouch-type secondary battery of FIG. 1.
FIG. 3 is a perspective view of a secondary battery according to the present disclosure.
FIG. 4 is an exploded perspective view of a secondary battery according to the present disclosure.
FIG. 5 is a view showing a state in which a plurality of wing portions are coupled to a cover member while overlapping each other in a secondary battery according to the present disclosure.
FIG. 6 is a development view of an exterior material for specifically describing the appearance of a guide line in a secondary battery according to the present disclosure.
FIG. 7 is a view showing a sealing area formed in a wing portion and a cover member in a secondary battery according to the present disclosure.
FIG. 8 is a view for describing a state in which a wing portion has a rectangular shape in a secondary battery according to the present disclosure.
FIG. 9 is a view for describing a process in which a wing portion and a cover member are coupled to each other in a secondary battery according to the present disclosure.
FIG. 10 is a view for describing a comparative example in which wing portions of a secondary battery do not overlap.
FIG. 11 is a flow chart showing a method for manufacturing a secondary battery according to the present disclosure.
FIG. 12 is a flow chart showing a packaging step in a method for manufacturing a secondary battery according to the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery and a method for manufacturing a secondary battery according to the present disclosure will be described with reference to the drawings.

### Secondary battery

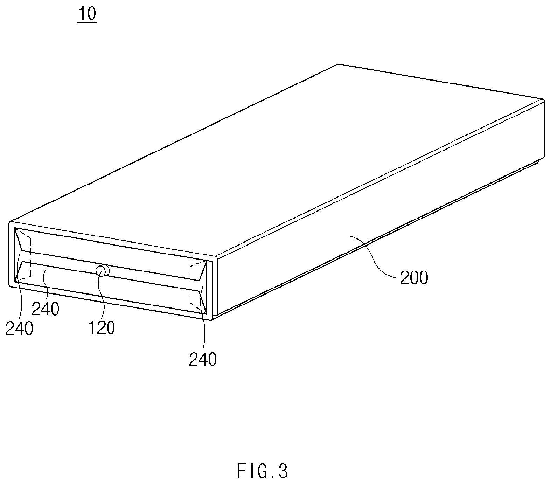

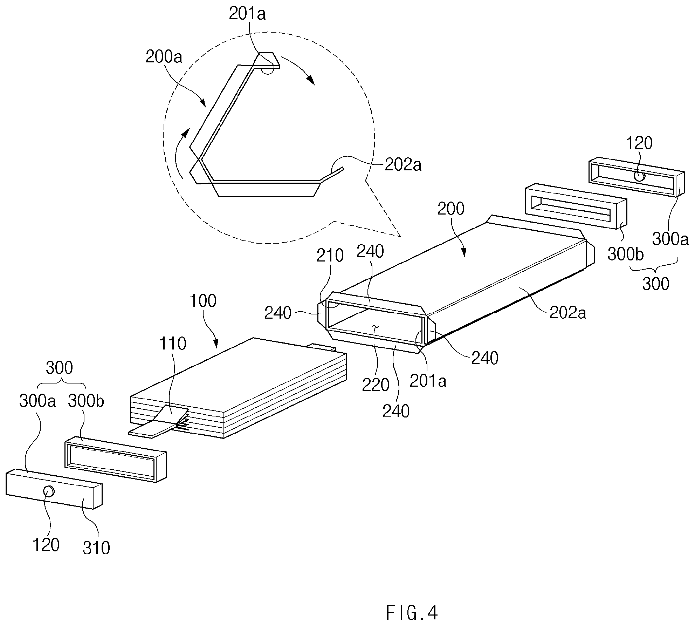

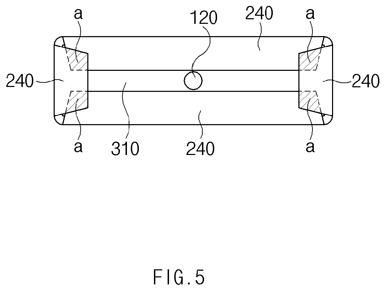

FIG. 3 is a perspective view of a secondary battery 10 according to the present disclosure, and FIG. 4 is an exploded perspective view of a secondary battery 10 according to the present disclosure. FIG. 5 is a view showing a state in which a plurality of wing portions 240 are coupled to a cover member 300 while overlapping each other.

Referring to FIGS. 3 to 5, a secondary battery 10 according to the present disclosure may include an electrode assembly 100; a pouch-type exterior material 200 having an internal space 220 that accommodates the electrode assembly 100 and an exterior material opening 210 that allows the internal space 220 to communicate with the outside; and a cover member 300 inserted into the exterior material opening 210. Here, the exterior material 200 may include a plurality of wing portions 240 folded to meet an outer surface 310 facing the outside among surfaces of the cover member 300, and the plurality of wing portions 240 may be coupled to the outer surface 310 of the cover member 300 to seal the internal space 220.

The electrode assembly 100 is a stack including a positive electrode, a negative electrode and a separator, and may have various structures. For example, the electrode assembly may be a stack type electrode assembly in which a positive electrode, a negative electrode and a separator are stacked in one direction, or a stack-folding type electrode assembly in which a positive electrode, a negative electrode and a separator are stacked in one direction and then folded.

Here, the positive electrode may include a positive electrode current collector and a positive electrode active material coated on the positive electrode current collector, and the negative electrode may include a negative electrode current collector and a negative electrode active material coated on the negative electrode current collector. The separator is an insulating material membrane interposed between the positive electrode and the negative electrode to block contact between the positive electrode and the negative electrode, and a plurality of pores through which positive ions pass may be formed in the separator.

The exterior material 200 is formed by winding an exterior material sheet 200a in one direction, and the internal space 220 for accommodating the electrode assembly 100 may be formed inside the wound exterior material sheet 200a. Additionally, both sides of the internal space 220 may communicate with the outside.

Specifically, the exterior material sheet 200a is a sheet having one end 201a and the other end 202a spaced apart from the one end 201a in a predetermined direction, and the exterior material 200 may be formed by rolling or folding the exterior material sheet 200a so that the one end 201a and the other end 202a meet. The one end 201a and the other end 202a of the exterior material sheet 200a may be coupled to each other in various ways. For example, the one end 201a and the other end 202a may be bonded with an adhesive, or the one end 201a and the other end 202a may be thermally fused to each other by receiving heat and pressure.

The one end 201a of the exterior material sheet 200a may be coupled to an inner surface or an outer surface of the other end 202a. As shown in FIG. 4, the outer surface of the one end 201a of the exterior material sheet 200a may be coupled to the inner surface of the other end 202a. Additionally, the inner surface of the one end 201a of the exterior material sheet 200a may be coupled to the inner surface of the other end 202a.

Meanwhile, the exterior material sheet 200a may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to a cover member 300 to be described later to seal the internal space 220, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the exterior material 200 of the secondary battery 10 according to the present disclosure is prepared by rolling or folding the exterior material sheet 200a, the electrode assembly 100 may be accommodated in the internal space 220 of the exterior material 200 without molding a separate cup portion. In this case, the conventional limitation due to the formation of the cup portion in the exterior material is not applied, so that the capacity of the secondary battery 10 may be easily increased by increasing the size of the internal space 220. Additionally, the exterior material 200 prepared by rolling or folding the exterior material sheet 200a is not formed with a part that decreases in thickness, and thus the occurrence of defects such as cracks in the exterior material 200 may be prevented.

For reference, the secondary battery 10 according to the present disclosure may be formed by seating the electrode assembly 100 on the upper surface of the exterior material sheet 200a in an unfolded state and then rolling or folding the exterior material sheet 200a. Additionally, the secondary battery 10 according to the present disclosure may be formed by rolling or folding the exterior material sheet 200a to form the internal space 220 and the exterior material opening 210 and then inserting the electrode assembly 100 into the exterior material opening 210. In both of the above cases, the electrode assembly 100 may be accommodated inside the exterior material 200 without molding a separate cup portion.

Meanwhile, referring to FIGS. 3 to 5, the cover member 300 may be a member that is coupled to the exterior material 200 and blocks the exterior material opening 210. The internal space 220 of the exterior material 200 in which the electrode assembly 100 is accommodated may be filled with an electrolyte, and the cover member 300 may seal the internal space 220 to prevent the electrolyte from leaking out of the internal space 220. Specifically, the cover member 300 inserted into the exterior material opening 210 that allows the internal space 220 to communicate with the outside may be coupled to a wing portion 240 of the exterior material 200 to be described later to seal the internal space 220.

The cover member 300 may be made of a material that is not easily permeable to moisture in order to be coupled to the wing portion 240 of the exterior material 200 and seal the internal space 220 of the exterior material 200. For example, the cover member 300 may be obtained from a metal or resin, or may be obtained from a laminate sheet in which a resin layer is formed on both surfaces of a metal layer.

Additionally, the cover member 300 may have various shapes. For example, the cover member 300 may be composed of a body 300a and a gasket 300b to block the internal space 220 of the exterior material 200. Specifically, a through hole through which a gas lead 120 passes may be formed in the body 300a. The gasket 300b is a member that surrounds the body 300a and may prevent electrolyte leakage between the exterior material 200 and the body 300a. In this case, the gasket 300b may also be a medium for a firm coupling between the exterior material 200 and the body 300a.

The gasket 300b may have various shapes. For example, the gasket 300b may have a picture frame shape that surrounds a side surface of the outer surface of the body 300a. Additionally, the gasket 300b may be formed to surround both the inner and outer surfaces of the body 300a.

At this time, the outer surface 310 facing the outside among surfaces of the cover member 300 may be coupled to the wing portion 240 of the exterior material 200 to seal the internal space 220 of the exterior material 200. The outer surface 310 of the cover member 300 may be an outer surface of the cover member 300 to which the body 300a and the gasket 300b are coupled.

As such, when the wing portion 240 of the exterior material 200 is coupled to the outer surface 310 of the cover member 300 to seal the internal space 220, only one sealing surface that seals the internal space 220 is formed between the wing portion 240 and the cover member 300, and thus the secondary battery 10 may be rapidly sealed. Additionally, the wing portion 240 is only coupled to the outer surface 310 of the cover member 300 and is not coupled to the corner of the cover member 300, so that the wing portion 240 may be firmly coupled to the cover member 300 to effectively seal the internal space 220 of the exterior material 200.

Meanwhile, as shown in FIGS. 3 to 5, a through hole into which an electrode lead 120 electrically connected to the electrode assembly 100 is inserted may be formed in the cover member 300. The electrode lead 120 is connected to electrode tabs 110 connected to each of the electrode uncoated portions of the electrodes stacked in the electrode assembly 100, and a portion of the electrode lead 120 may be exposed to the outside of the secondary battery 10. Here, the through hole may have a shape corresponding to the shape of the inserted electrode lead 120.

The electrode lead 120 is configured to electrically connect the electrode assembly 100 to another device, and may have various shapes. For example, the electrode lead 120 is provided to penetrate the body 300a of the cover member 300, and may be formed in an I-shape so as not to be easily separated from the body 300a. Additionally, the electrode tabs 110 may be coupled to one surface of the electrode lead 120.

Additionally, a sealing member such as an O-ring may be interposed between the through hole and the electrode lead 120, or a sealant layer made of a thermoplastic resin may be formed. In this case, it is possible to prevent the electrolyte injected into the internal space 220 from leaking through the through hole.

Meanwhile, an electrolyte injection port for injecting an electrolyte into the internal space 220 of the exterior member 200 in which the electrode assembly 100 is accommodated may be formed in the cover member 300. The electrolyte injection port may be a through hole penetrating the cover member 300.

An electrolyte injection process for injecting an electrolyte into the internal space 220 may be performed through the electrolyte injection port. For example, the user may inject the electrolyte into the internal space 220 of the exterior material 200 through the electrolyte injection port in a state of disposing the secondary battery 10 so that the cover member 300 in which the electrolyte injection port is formed faces upward.

Additionally, a degassing process for discharging gas generated during activation of the secondary battery 10 to the outside may be performed through the electrolyte injection port. For example, the user may open the electrolyte injection port to induce the discharge of gas in the internal space 220.

After the electrolyte injection process or the degassing process, the electrolyte injection port may be sealed or welded to seal the internal space 220. Additionally, it is also possible to open the electrolyte injection port only when necessary, by installing a valve capable of opening and closing the electrolyte injection port.

On the other hand, the conventional pouch-type secondary battery has a gas pocket formed by rolling up a portion of the exterior material, and the gas pocket is removed from the exterior material after capturing the internal gas of the exterior material, so that there is conventionally a problem that a portion of the exterior material is repeatedly discarded. In this regard, the secondary battery 10 according to the present disclosure includes an electrolyte injection port formed in the cover member 300, and the user may inject an electrolyte into the internal space 220 and discharge gas from the internal space 220 to the outside through such an electrolyte injection port, thereby solving the conventional problem that a portion of the exterior material is repeatedly discarded.

Additionally, a part of the cover member 300 where the electrolyte injection port and the through hole are formed may not overlap with the plurality of wing portions 240. Specifically, the plurality of wing portions 240 are coupled to some of the outer surface of the cover member 300, and the electrolyte injection port and the through hole may be formed in the middle portion of the cover member 300 where the wing portions 240 are not coupled.

Therefore, the plurality of wing portions 240 do not interfere with the electrode lead 120 passing through the through hole. Additionally, even when the electrolyte is injected through the electrolyte injection port or the internal gas is discharged, the plurality of wing portions 240 do not provide any interference.

Meanwhile, as shown in FIGS. 3 to 5, the exterior material 200 may include wing portions 240 formed by cutting a portion of an exterior material sheet 200a. A plurality of wing portions 240 may be formed on the exterior material 200, and the plurality of wing portions 240 may be coupled to the outer surface 310 of the cover member 300 to seal the internal space 220.

The wing portion 240 may have various shapes. The wing portion 240 may have a rectangular shape, and as shown in FIG. 4, the wing portion 240 may have a trapezoidal shape.

Each of the plurality of wing portions 240 may be coupled to the outer surface 310 of the cover member 300 in a thermal fusion manner. Specifically, the cover member 300 and the wing portion 240 may be pressed by a sealing block at a high temperature, or may be thermally fused to each other by simultaneously receiving heat and pressure by the sealing block. At this time, the sealing block may press a part where the flat outer surface 310 of the cover member 300 and the wing portion 240 meet to thermally fuse the wing portion 240 and the outer surface 310.

Here, there is no protruding or dug part in a pressing surface where the sealing block presses the wing portion 240 and the outer surface 310, and thus the sealing block may uniformly press the wing portion 240 and the outer surface 310. In this case, the wing portion 240 may be uniformly thermally fused to the outer surface 310 of the cover member 300 to form a sealing portion that seals the internal space 220 of the exterior material 200. The cover member 300 may be composed of a body 300a and a gasket 300b, and thus the wing portion 240 may be thermally fused to the outer surface of the body 300a and the gasket 300b to seal the inside thereof.

Meanwhile, each of the plurality of wing portions 240 may be coupled to the outer surface 310 of the cover member 300 in an adhesive manner. Specifically, an adhesive layer by an adhesive tape or a cured adhesive may be formed between the wing portion 240 and the outer surface 310 of the cover member 300, and this may be a sealing portion that seals the internal space 220 of the exterior material 200.

Additionally, the overlapping portion (a) where the plurality of wing portions 240 overlap each other may be bonded or fused to each other. Specifically, an adhesive layer by an adhesive tape or a cured adhesive may be formed on the overlapping portion (a) where the plurality of wing portions 240 overlap each other. Additionally, the overlapping portion (a) may be pressed by a sealing block to be thermally fused to each other.

As such, when the overlapping portion (a) where the plurality of wing portions 240 overlap each other is coupled, the secondary battery 10 has a first coupling layer formed between the plurality of wing portions 240 and the cover member 300 and a second coupling layer formed on the overlapping portion (a), which may effectively seal the internal space 220 of the exterior material 200.

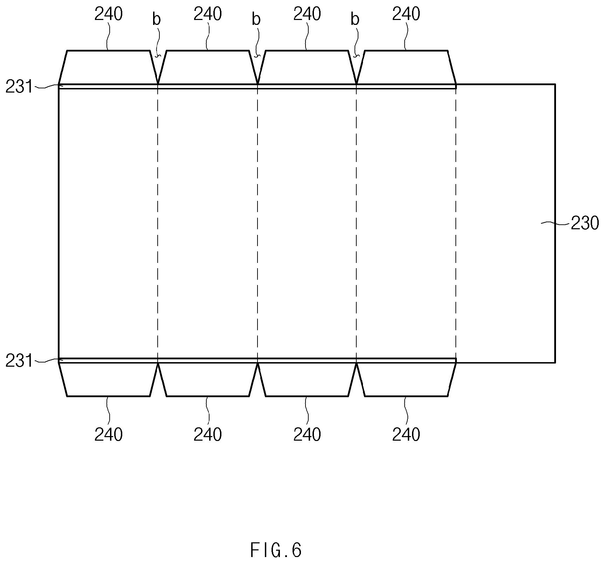

Meanwhile, FIG. 6 is a development view of an exterior material 200 and is a view for describing the appearance of a guide line 231 formed on the inner surface 230 of the exterior material 200. Referring to FIG. 6, guide lines 231 that guide folding of the wing portions 240 may be formed on the inner surface 230 of the exterior material 200. Specifically, the guide lines 231 may be formed on the inner portion of the wing portion 240 of the inner surface 230 of the exterior material 200. After the exterior material 200 is rolled or folded to form the internal space 220 and the exterior material opening 210, the wing portions 240 may be folded into the internal space 220 along the guide lines 231 formed on the inner surface 230 of the exterior material 200.

At this time, the guide line 231 may be a groove portion formed on the inner surface 230 of the exterior material 200. In this case, a part of the exterior material 200 where the guide line 231 is formed has a thin thickness compared to the surrounding part, and thus it may be folded or bent with relatively little force.

The exterior material 200 may be formed with a plurality of notched portions (b) to separate the wing portions 240. That is, a notched portion (b) in which a portion of the exterior material 200 is notched may be formed between the wing portions 240. The notched portion (b) may be formed at various depths. For example, the notched portion (b) may be formed between one end of the exterior material sheet and the guide line 231.

Additionally, the notched portion (b) may have various shapes. For example, as shown in FIG. 6, the notched portion (b) may be an area in which the exterior material 200 is cut into a triangular shape. Additionally, the notched portion (b) may be formed by cutting the exterior material 200 into a trapezoidal shape.

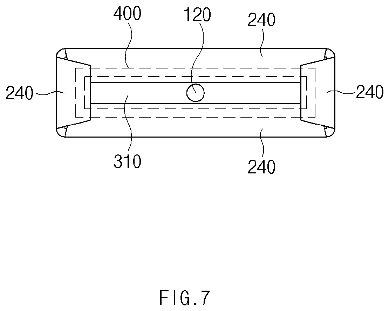

FIG. 7 is a view showing a sealing area 400 formed in a wing portion 240 and a cover member 300. Referring to FIG. 7, a sealing area 400 in the shape of a rectangular ring may be formed between the wing portion 240 and the cover member 300. The sealing area 400 is a closed loop area formed by the wing portion 240 and the cover member 300 being pressed by a pressing member 500 to be described later, and may seal the internal space 220 of the exterior material 200 from the outside.

Specifically, the wing portion 240 and the outer surface 310 of the cover member 300 may be thermally fused to each other along the sealing area 400 in the shape of a closed loop to seal the internal space 220. Additionally, parts included in the sealing area 400 among the portion where the wing portions 240 overlap each other may be thermally fused to each other. That is, the part included in the sealing area 400 among the overlapping portion (a) where the wing portions 240 overlap each other may be thermally fused.

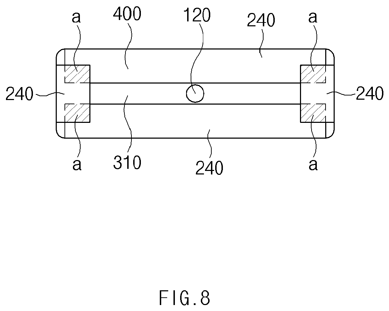

FIG. 8 is a view for describing a state in which a wing portion has a rectangular shape in a secondary battery according to the present disclosure. Referring to FIG. 8, each of the plurality of wing portions 240 has a rectangular shape, and the overlapping portion (a) where these wing portions 240 overlap each other may also have a rectangular shape.

Meanwhile, the gap between the wing portions 240 having a trapezoidal or rectangular shape may be formed relatively narrowly. Therefore, these wing portions 240 may cover most of the edge of the outer surface 310 of the cover member 300, and thus the secondary battery 10 may have a high sealing force. Additionally, although not shown in FIGS. 7 and 8, the plurality of wing portions 240 may be coupled up to the corner portion of the outer surface 310 to seal the entire edge portion of the outer surface 310.

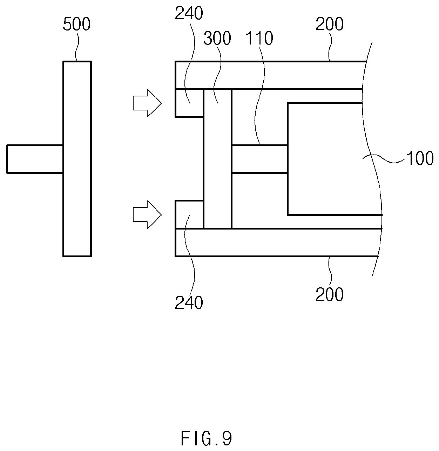

FIG. 9 is a view for describing a process in which a wing portion 240 and a cover member 300 are coupled to each other. Referring to FIG. 9, the wing portion 240 may be pressed by the pressing member 500 in a folded state toward the cover member 300. The pressing member 500 may press the wing portion 240 and the cover member 300 at a high temperature to fuse the wing portion 240 and the cover member 300.

Additionally, a heating element such as a heating wire may be installed in the pressing member 500. In this case, the pressing member 500 may simultaneously apply heat and pressure to the wing portion 240 and the cover member 300 to fuse the wing portion 240 and the cover member 300.

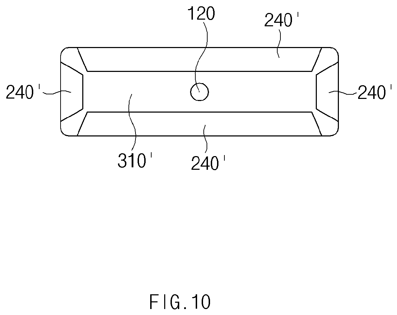

Meanwhile, FIG. 10 is a view for describing a comparative example in which wing portions of a secondary battery do not overlap. FIG. 10 shows a state in which wing portions 240' of the secondary battery do not overlap each other. At this time, the front surfaces of the wing portions 240' of the secondary battery may all be attached to an outer surface 310' of the cover member. Additionally, a through hole 320' through which the electrode lead passes and an electrolyte injection port into which an electrolyte is injected may not overlap with the plurality of wing portions 240'.

When the wing portions 240' do not overlap each other in this way, the wing portions 240' are all attached only to the outer surface 310' of the cover member, and thus the wing portions 240' may not effectively seal the internal space of the secondary battery. Therefore, when the internal pressure increases as the secondary battery is repeatedly charged and discharged, the coupling between the wing portions 240' and the outer surface 310' may be released.

Unlike the comparative example shown in FIG. 10, the secondary battery 10 according to the present disclosure has a first coupling layer formed between the plurality of wing portions 240 and the cover member 300 and a second coupling layer formed in the overlapping portion (a), which may effectively seal the internal space 220 of the exterior material 200.

### Method for manufacturing secondary battery

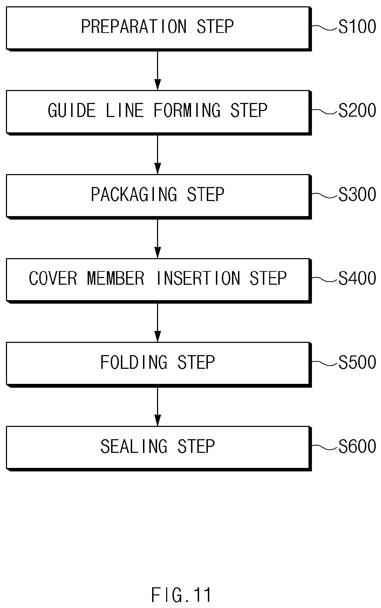

FIG. 11 is a flow chart showing a method for manufacturing a secondary battery according to the present disclosure. The method for manufacturing a secondary battery according to the present disclosure may include a preparation step S100 of preparing an electrode assembly 100 and an exterior material sheet 200a where a plurality of wing portions 240 are formed; a packaging step S300 of wrapping the electrode assembly 100 with the exterior material sheet 200a so that an internal space 220 accommodating the electrode assembly 100 and an exterior material opening 210 allowing the internal space 220 to communicate with the outside are formed; a cover member insertion step S400 of inserting a cover member 300 into the exterior material opening 210; a folding step S500 of folding the plurality of wing portions 240 so that the plurality of wing portions 240 meet an outer surface 310 facing the outside among surfaces of the cover member 300; and a sealing step S600 of sealing the internal space 220 by coupling the plurality of wing portions 240 and the outer surface 310 of the cover member 300.

In this way, when the wing portion 240 of the exterior material 200 is coupled to the outer surface 310 of the cover member 300 to seal the internal space 220, only one sealing surface that seals the internal space 220 is formed between the wing portion 240 and the cover member 300, and thus the secondary battery 10 may be rapidly sealed. Additionally, the wing portion 240 is only coupled to the outer surface 310 of the cover member 300 and is not coupled to the corner of the cover member 300, so that the wing portion 240 may be firmly coupled to the cover member 300 to effectively seal the internal space 220 of the exterior material 200.

The preparation step S100 is a step of preparing an electrode assembly 100 and an exterior material sheet 200a where a plurality of wing portions 240 are formed, and may include a wing portion forming step of forming a plurality of wing portions 240 on the exterior material sheet 200a by cutting the exterior material sheet 200a. At this time, the wing portion forming step may be a step of forming a plurality of trapezoidal wing portions 240 by forming triangular or trapezoidal notched portions (b) on the exterior material sheet 200a.

Here, the notched portion (b) may be formed by cutting the exterior material sheet 200a. Specifically, the notched portion (b) may be formed between one end of the exterior material sheet and the guide line 231. When a plurality of notched portions (b) are formed at one end of the exterior material sheet 200a, an uncut portion of the exterior material sheet 200a is located between the plurality of notched portions (b), and the corresponding portion may be the wing portion 240.

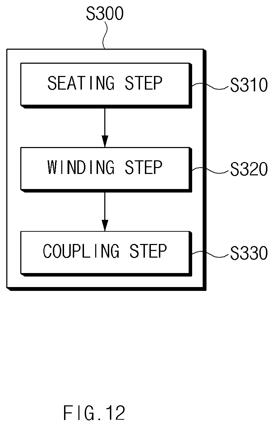

FIG. 12 is a flow chart showing a packaging step in a method for manufacturing a secondary battery according to the present disclosure. The packaging step S300 may include a seating step S310 of placing the electrode assembly 100 on an upper surface of the exterior material sheet 200a; a winding step S320 of wrapping the electrode assembly 100 by rolling or folding the exterior material sheet 200a so that one end 201a and the other end 202a of the exterior material sheet 200a meet each other; and a coupling step S330 of bonding or fusing one end 201a and the other end 202a of the exterior material sheet 200a.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, in the case of the method of manufacturing a secondary battery according to the present disclosure, the electrode assembly 100 is wrapped by rolling or folding the exterior material sheet 200a, the electrode assembly 100 may be accommodated inside the exterior material 200 without molding a separate cup portion. In this case, the conventional limitation due to the formation of the cup portion in the exterior material is not applied, so that the capacity of the secondary battery 10 may be easily increased. Additionally, the exterior material 200 prepared by rolling or folding the exterior material sheet 200a is not formed with a part that decreases in thickness, and thus the occurrence of defects such as cracks in the exterior material 200 may be prevented.

For reference, the packaging step S300 may be composed of a first step of forming an internal space 220 and an exterior material opening 210 by rolling or folding the exterior material sheet 200a so that one end 201a and the other end 202a of the exterior material sheet 200a meet each other, a second step of coupling one end 201a and the other end 202a of the exterior material sheet 200a in a fusion or adhesive manner, and a third step of seating the electrode assembly 100 in the internal space 220 by inserting the electrode assembly 100 into the exterior material opening 210. Even in this case, the electrode assembly 100 may be accommodated in the internal space 220 without molding a separate cup portion in the exterior material 200.

Meanwhile, the folding step S500 may be a step of sequentially folding the plurality of wing portions 240 so that the plurality of wing portions 240 are folded in a state of overlapping each other. In this case, a portion a where the plurality of wing portions 240 overlap each other may be formed on the outside of the outer surface 310 of the cover member 300.

The sealing step S600 may include a step of applying heat and pressure to the cover member 300 and the plurality of wing portions 240 so that the plurality of wing portions 240 are fused to the outer surface 310 of the cover member 300 in a state of overlapping each other. In this case, when the overlapping portion (a) where the plurality of wing portions 240 overlap each other is fused, the secondary battery 10 has a first coupling layer formed between the plurality of wing portions 240 and the cover member 300 and a second coupling layer formed on the overlapping portion (a), which may effectively seal the internal space 220 of the exterior material 200.

Meanwhile, the method of manufacturing a secondary battery according to the present disclosure may include a guide line forming step S200 performed between the preparation step S100 and the packaging step S300 and forming a guide line 231 that guides folding of the wing portions 240 by digging a groove in the inner surface 230 of the exterior material sheet 200a. In this case, a part of the exterior material 200 where the guide line 231 is formed has a thin thickness compared to the surrounding part, and thus it may be folded or bent with relatively little force.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 10: | Secondary battery | 100: | Electrode assembly |
| 110: | : Electrode tab | 120: | Electrode lead |
| 200: | : Exterior material | 200a: | Exterior material sheet |
| 201a: | One end of exterior material sheet | 202a: | The other end of exterior material |
| | | | sheet |
| 210: | Exterior material opening | 220: | Internal space |
| 230: | Inner surface of exterior material | 231: | Guide line |
| 240: | Wing portion | 300: | Cover member |
| 310: | Outer surface of cover member | 320: | Through hole |
| 400: | Sealing area | 500: | Pressing member |
| S100: | Preparation step | S200: | Guide line forming step |
| S300: | Packaging step | S310: | Seating step |
| S320: | Winding step | S330: | Coupling step |
| S400: | Cover member insertion step | S500: | Folding step |
| S600: | Sealing step | | |

## Claims

1. A secondary battery, comprising:
an electrode assembly;
a pouch-type exterior material having an internal space that accommodates the electrode assembly and an exterior material opening that allows the internal space to communicate with the outside; and
a cover member inserted into the exterior material opening,
wherein the exterior material comprises a plurality of wing portions folded to meet an outer surface facing the outside among surfaces of the cover member, and
the plurality of wing portions are coupled to the outer surface of the cover member to seal the internal space.

2. The secondary battery according to claim 1,
wherein the exterior material is formed by rolling or folding an exterior material sheet so that one end and the other end of the exterior material sheet comprising a metal layer and a resin layer formed on both surfaces of the metal layer meet each other.

3. The secondary battery according to claim 2,
wherein one end and the other end of the exterior material sheet are bonded or fused to each other.

4. The secondary battery according to claim 1,
wherein each of the plurality of wing portions has a trapezoidal or rectangular shape.

5. The secondary battery according to claim 1,
wherein the plurality of wing portions are coupled to the outer surface of the cover member in a state of overlapping each other.

6. The secondary battery according to claim 5,
wherein portions where the plurality of wing portions overlap are bonded or fused to each other.

7. The secondary battery according to claim 5,
wherein the plurality of wing portions are coupled to the outer surface of the cover member by adhesion or fusion.

8. The secondary battery according to claim 1,
wherein guide lines that guide folding of the wing portions are formed on an inner surface of the exterior material.

9. The secondary battery according to claim 8,
wherein the guide line is a groove portion formed on the inner surface of the exterior material.

10. The secondary battery according to claim 1,
wherein a through hole into which an electrode lead is inserted is formed in the cover member, and
the plurality of wing portions do not overlap the through hole.

11. A method for manufacturing a secondary battery, comprising:
a preparation step of preparing an electrode assembly and an exterior material sheet where a plurality of wing portions are formed;
a packaging step of wrapping the electrode assembly with the exterior material sheet so that an internal space accommodating the electrode assembly and an exterior material opening allowing the internal space to communicate with the outside are formed;
a cover member insertion step of inserting a cover member into the exterior material opening;
a folding step of folding the plurality of wing portions so that the plurality of wing portions meet an outer surface facing the outside among surfaces of the cover member; and
a sealing step of sealing the internal space by coupling the plurality of wing portions and the outer surface of the cover member.

12. The method for manufacturing a secondary battery according to claim 11,
wherein the preparation step comprises a wing portion forming step of forming a plurality of wing portions on the exterior material sheet by cutting the exterior material sheet.

13. The method for manufacturing a secondary battery according to claim 12,
wherein the wing portion forming step comprises a step of forming a plurality of trapezoidal wing portions by forming triangular or trapezoidal notched portions on the exterior material sheet.

14. The method for manufacturing a secondary battery according to claim 11,
wherein the packaging step comprises:
a seating step of placing the electrode assembly on an upper surface of the exterior material sheet;
a winding step of wrapping the electrode assembly by rolling or folding the exterior material sheet so that one end and the other end of the exterior material sheet meet each other; and
a coupling step of bonding or fusing the one end and the other end of the exterior material sheet.

15. The method for manufacturing a secondary battery according to claim 11,
wherein the folding step comprises a step of sequentially folding the plurality of wing portions so that the plurality of wing portions are folded in a state of overlapping each other.

16. The method for manufacturing a secondary battery according to claim 15,
wherein the sealing step comprises a step of applying heat and pressure to the cover member and the plurality of wing portions so that the plurality of wing portions are fused to the outer surface of the cover member in a state of overlapping each other.

17. The method for manufacturing a secondary battery according to claim 11, further comprising:
a guide line forming step performed between the preparation step and the packaging step and forming guide lines that guide folding of the wing portions by digging a groove in the inner surface of the exterior material sheet.
